# EUROPÄISCHE PATENTSCHRIFT

(11) **EP 2 714 393 B1**
(45) Veröffentlichungstag und Bekanntmachung des Hinweises auf die Patenterteilung: **15.07.2015**
(21) Anmeldenummer: 12720777.7
(22) Anmeldetag: 27.02.2012
(51) Int. Cl.: B32B 27/12, B32B 27/40, B32B 37/15, D06N 3/18, E04B 1/66, E04B 1/62, D06N 3/14, D06N 3/00

(54) **MEHRLAGIGE FASSADENFOLIE**
MULTI-LAYER FAÇADE FILM
FEUILLE MULTICOUCHE POUR FAÇADE

(30) Priorität: 03.06.2011 DE 102011050829
(43) Veröffentlichungstag der Anmeldung: 09.04.2014
(73) Patentinhaber: Hogg, Hermann, 79361 Sasbach (DE)
(72) Erfinder: KRONENBERG, Bernd, 41844 Wegberg (DE)
(74) Vertreter: Habbel, Ludwig
(86) Internationale Anmeldenummer: PCT/DE2012/100048
(87) Internationale Veröffentlichungsnummer: WO 2012/163339

(56) Entgegenhaltungen:
- WO-A1-2004/022896
- DE-A1- 19 908 465
- DE-A1-102006 052 561
- DE-U1-202004 007 543
- DE-U1-202010 000 934

## Beschreibung

Die Neuerung betrifft eine mehrlagige Fassadenfolie nach dem Oberbegriff des Anspruchs 1.

Aus der Praxis sind gattungsgemäße Fassadenfolien bekannt, bei denen ausschließlich die beiden genannten Lagen vorgesehen sind, nämlich eine Vlieslage, die beispielsweise aus Glasfasern bestehen kann und die mit einer aus einer Kunststofffolie gebildeten Folienlage fest verbunden ist, beispielsweise laminiert oder geklebt ist, um der Kunststofffolie eine geringfügig höhere Zugfestigkeit zu vermitteln.

Weiterhin sind gattungsfremde Fassadenfolien bekannt, die aus einem gummielastischen Werkstoff bestehen, und zwar ausschließlich aus dieser einen Lage eines gummielastischen Werkstoffs, wobei diese in der Praxis als "Gummifolie" bezeichnete Lage mit Poren versehen ist, beispielsweise mit etwa 25 bis etwa 60 Poren pro Quadratzentimeter. Diese Poren können durch eine Nadelung der Gummifolie erzeugt sein. Derartige Gummifolien weisen, da sie Dampfdiffusionsoffen ausgestaltet sein sollen, einen entsprechenden s_{d}-Wert von etwa 3 m auf. Als s_{d}-Wert ist dabei die wasserdampfdiffusionsäquivalente Luftschichtdicke bezeichnet, also ein in der Bauphysik gebräuchliches Maß für den Widerstand, den eine Bauteilschicht der Wasserdampfdiffusion entgegensetzt. Der s_{d}-Wert beschreibt den Diffusionswiderstand anschaulich, indem er die Dicke angibt, welche eine ruhende Luftschicht haben muss, damit sie im stationären Zustand und unter denselben Randbedingungen von demselben Diffusionsstrom durchflossen wird wie die betrachtete Bauteilschicht. Kleinere s_{d}-Werte stehen also für eine höhere Dampfdiffusionsoffenheit.

Die erwähnten gattungsfremden, genadelten Gummifolien weisen zudem hinsichtlich der Wasserdichtigkeit einen Wert von etwa 200 mm Wassersäule auf, gemessen nach DIN EN 1928, Verfahren B bei einem Prüfklima: DIN 50014-23/50-2. Für die Bemessung der Wasserdichtigkeit sind möglichst hohe Werte vorteilhaft.

Im Unterschied zu den erwähnten gattungsfremden Gummifolien weisen gattungsgemäße Fassadenfolien hinsichtlich der Dampfdiffusionsoffenheit s_{d}-Werte von einem Meter oder weniger auf, und hinsichtlich der Wasserdichtigkeit Werte von 10 m Wassersäule oder mehr.

Fassadenfolien unterscheiden sich grundsätzlich von Folien, die im Hochbau beispielsweise im Bereich des Dachausbaus eingesetzt werden: Bei Bedachungen sind die Folien oberhalb einer Wärmedämmschicht, beispielsweise Mineralwolle, vorgesehen. Üblicherweise wird anschließend, außen auf den Folien, die Dachlattung angebracht, auf welche dann die eigentlichen Deckelemente des Daches gehalten werden, beispielsweise Dachsteine aus Beton oder Dachziegel aus Ton. Die Deckelemente des Daches stellen die wasserführende Ebene des Dachs dar, so dass die Folie parallel zu der wasserführenden Ebene des Dachs verläuft. Im Unterschied dazu ist in einer Gebäudefassade die Folie selbst die wasserführende Ebene.

Der Neuerung liegt die Aufgabe zugrunde, eine Fassadenfolie dahingehend zu verbessern, dass diese hervorragende Werte für die Dampfdiffusionsoffenheit einerseits und für die Wasserdichtigkeit andererseits aufweist und dass die Fassadenfolie hervorragende mechanische Widerstandswerte gegen die auf die Fassadenfolie einwirkenden Belastungen aufweist. Weiterhin liegt der Neuerung die Aufgabe zugrunde, einen an einer Baustelle problemlos einsetzbaren, die Benutzung der Fassadenfolie vereinfachenden Fassadendichtstreifen zu schaffen, welcher die Vorteile der Fassadenfolie aufweist.

Diese Aufgabe wird durch eine mehrlagige Fassadenfolie mit den Merkmalen des Anspruchs 1 gelöst. Die vorschlagsgemäße Fassadenfolie kann vorteilhaft in Form eines vorkonfektionierten Fassadendichtstreifen nach Anspruch 11 vertrieben werden.

Die Neuerung schlägt mit anderen Worten vor, die Fassadenfolie nicht zweilagig, sondern mindestens dreilagig auszugestalten. Dies ist insofern überraschend, als die Dampfdiffusionsoffenheit üblicherweise durch die Vlieslage aufgrund der Offenheit der Vliesstruktur nicht nennenswert beeinträchtigt wird, sondern vielmehr durch die Folienstruktur bestimmt wird. Daher ist die Verwendung von zwei Folienlagen bei einem dreilagigen Aufbau der Folie zunächst nicht zu erwarten. Vorschlagsgemäß sind zwei Folienlagen vorgesehen, wobei die Vlieslage als Mittellage zwischen den beiden Folienlagen angeordnet ist. Den Erwartungen entsprechend würde durch die Anordnung von zwei Folienlagen die Dampfdiffusionsoffenheit der resultierenden mehrlagigen Fassadenfolien erheblich beeinträchtigt gegenüber herkömmlichen Folien. Tatsächlich jedoch hat sich überraschend herausgestellt, dass bei geeigneter Auswahl handelsüblicher Folien eine Dampfdiffusionsoffenheit erzielt werden kann, welche den gattungsgemäßen Fassadenfolien in nichts nachsteht, also einen s_{d}-Wert aufweist, der höchstens 1,5 Meter beträgt. In praktischen Versuchen konnten sogar s_{d}-Werte von weniger als 1 Meter erzielt werden. Die Wasserdichtigkeit kann gegenüber den handelsüblichen Fassadenfolien dabei erheblich verbessert werden, so dass hinsichtlich der Wasserdichtigkeit die vorschlagsgemäße Fassadenfolie Werte von wenigstens 8 m aufweist und in praktischen Versuchen sogar Werte von 20 m Wassersäule erzielt werden konnten.

Die gute mechanische Belastbarkeit beruht aus der vorschlagsgemäßen Kombination einer unidirektional elastisch verformbaren Vlieslage und der dehnbaren Folienlagen. Durch die Ausgestaltung des Vlieses als so genanntes "Meltblown"-Produkt wird die elastische Verformbarkeit mit dem entsprechenden Rückstellvermögen sichergestellt. Die elastische Dehnbarkeit des Vlieses ist sowohl in Längs-, Quer- und Diagonalrichtung des Vlieses gegeben, also unidirektional. Dadurch kann die gesamte Folie gedehnt werden, ohne dass es zu einer Delamination kommt, wie sie bei Verwendung einer nicht oder nur monodirektional dehnbaren Vlieslage auftreten kann. Nach der Dehnung kann die gesamte Fassadenfolie aufgrund des elastischen Dehnungsverhaltens sämtlicher drei Lagen ihre ursprüngliche Form wieder einnehmen und somit auch ihre ursprünglichen Eigenschaften aufweisen. Durch die Dehnbarkeit kann die Fassadenfolie z. B. über einen Rohrstutzen gezogen werden, nachdem eine kleine Öffnung in die Fassadenfolie geschnitten wurde. Sie legt sich anschließend dicht an den Rohrstutzen an, wenn die Öffnung kleiner bemessen ist als der Querschnitt des Rohrstutzens. Im Ergebnis weist die vorschlagsgemäße Fassadenfolie Dichtigkeits- und Elastizitätseigenschaften auf wie eine so genannte Gummi- oder EPDM-Folie, allerdings bei weit höherer Dampfdiffusionsoffenheit, geringerem Flächengewicht und geringeren Herstellungskosten.

Weiterhin wird die gute mechanische Belastbarkeit durch einen innigen Verbund der Vlieslage mit den beiden Folienlagen sichergestellt, der einer Delamination entgegenwirkt. Der innige Verbund wird dadurch sichergestellt, dass das Vlies aus einem thermoplastischen Elastomer besteht, und dass jede Folienlage ebenfalls ein elastisch verformbares Material enthält und als Extrusionsbeschichtung mit dem Vlies verbunden ist. Dabei wird das die Folienlage bildende Material unmittelbar aus einer Breitschlitzdüse im Extrusionsverfahren mit dem zuvor geschaffenen Vlies verbunden, so dass neben einer regelrechten mechanischen Verzahnung partielle homogene Verschmelzungen zwischen der noch schmelzwarmen Folienlage und dem Vlies stattfinden. Durch diesen Verbund kann zudem Klebstoff bzw. ein Haftvermittler eingespart werden, so dass die Fassadenfolie sehr wirtschaftlich herstellbar ist und ein geringes Flächengewicht aufweist, was ihre Handhabung vereinfacht, z. B. wenn die Fassadenfolie in einem höheren Stockwerk eines Bauwerks verarbeitet werden soll.

Dabei ist vorschlagsgemäß vorgesehen, dass die beiden Folienlagen ebenso wie die Vlieslage unidirektional elastisch dehnbar sind, so dass die Fassadenfolie eine Dehnfestigkeit von wenigstens 40 % sowohl in Längsrichtung als auch in Querrichtung aufweist und eine Reißfestigkeit von wenigstens 120 N bei Belastung eines 50 mm breiten Folienstreifens. Die vorschlagsgemäße Fassadenfolie reißt also erst, wenn sie um mehr als 40 % ihrer ursprünglichen Ausdehnung gedehnt wird, wobei in praktischen Versuchen für die Reißfestigkeit sogar Werte von mehr als 65 % bei Belastung in Längsrichtung der Folie und von mehr als 85 % bei Belastung in Querrichtung der Folie ermittelt wurden. Längs- und Querrichtung bemessen sich dabei nach dem Produktionsverfahren, so dass eine auf eine Trommel aufgewickelte Folie in Umfangsrichtung der Trommel ihre Längsrichtung aufweist und in Achsrichtung der Trommel ihre Querrichtung aufweist.

Durch diese Dehnfähigkeit der Fassadenfolie, verbunden mit der hohen Reißfestigkeit von 120 N auf einem praxisüblichen 50 mm breiten Teststreifen, ist sichergestellt, dass beispielsweise bei auf eine Fassade einwirkenden Windlasten die bei einer hinterlüfteten Fassade auf die Folie einwirkenden Druck- bzw. Sogwirkungen nicht zu einem Versagen der Folie insbesondere nicht zum Einreißen der Fassadenfolie führen.

Vorteilhaft kann vorgesehen sein, dass die Folienlagen jeweils aus einer monolithischen Kunststofffolie gebildet sind. Als monolithisch ist dabei bezeichnet, dass die Folienlagen keine regelrechten Poren aufweisen, die gegebenenfalls mechanisch erzeugt werden, sondern dass sie vielmehr aus einem Material bestehen, dessen Molekülstruktur dickere und dünnere Bereiche aufweist, wobei die dünneren Bereiche des Molekülaufbaus die Permeabilität der Folie bewirken. Dabei ist es aus der Praxis bekannt, dass die Bezugsquellen, von denen das zur Folienherstellung verwendete Material bezogen wird, auch Angaben darüber machen, bei welcher Schichtdicke des hergestellten Produkts - also z. B. bei welcher Schichtdicke einer extrudierten Folienlage der Fassadenfolie - dieses Produkt welche Dampfdiffusionsdurchlässigkeit und Wasserdichtheit aufweist. Je nach verwendetem Material und den dazu angegebenen Eigenschaften kann daher die Schichtdicke so eingestellt werden, dass die gewünschten Eigenschaften der Fassadenfolie resultieren.

Vorteilhaft kann vorgesehen sein, dass das Vlies und / oder die Folienlagen jeweils aus einem thermoplastischen Urethan, also TPU, gebildet sind. TPU kann mittels der Schichtdicke so eingestellt werden, dass die Fassadenfolie die gewünschten Werte für Dampfdiffusionsdurchlässigkeit und Wasserdichtheit aufweist. Zudem weist eine aus TPU bestehende äußere Folienlage hervorragende Reibfestigkeitswerte auf: wenn die Fassadenfolie an der Baustelle über die Kante eines Gerüstes oder an einem vorstehenden Nagel- oder Schraubenkopf entlang gezogen wird, oder wenn ein Werkzeug an der Fassadenfolie entlang geführt wird, hat die Fassadenfolie eine hohe Widerstandskraft, bevor ihre Oberfläche beschädigt werden kann und die Eigenschaften der Fassadenfolie beeinträchtigt werden.

Insbesondere wenn sowohl das Vlies als auch die Folienlagen aus TPU gebildet sind, ergibt sich eine hervorragende Möglichkeit, eine innige Verbindung zwischen dem Vlies und den beiden Folienlagen im Extrusionsbeschichtungsverfahren zu erreichen, ohne einen Kosten und Gewicht der Fassadenfolie nachteilig beeinflussenden Haftvermittler verwenden zu müssen.

Die als Meltblown-Produkt hergestellte Vlieslage ist selbstverfestigend bzw. thermisch verfestigt. Auf diese Weise wird einer Delamination der Fassadenfolie entgegengewirkt, wenn beispielsweise Sogkräfte auf die Folie einwirken, so dass in diesen Fällen die Vlieslage nicht als leicht aufzutrennende Trennschicht zwischen den beiden Folienlagen wirkt.

Dabei kann vorteilhaft vorgesehen sein, dass die Vlieslage ein geringes Flächengewicht aufweist, vorteilhaft ein Flächengewicht von mehr als 40 g/m² und höchstens 150 g/m², so dass eine leichtgewichtige Fassadenfolie geschaffen wird, die nicht bereits durch ihr Eigengewicht bei größeren Folienabmessungen zu unerwünschten mechanischen Belastungen der Folie bzw. einer eventuellen Fügestelle oder Naht führt.

Vorteilhaft kann vorgesehen sein, dass das Vlies hydrophob ist, um auf diese Weise zu vermeiden, dass durch die Aufnahme von Feuchtigkeit eine Isolierwirkung der Vlieslage beeinträchtigt wird. Zudem könnte bei Temperaturen unter 0°C die Gefahr bestehen, dass gefrierendes Wasser zur Zerstörung des Verbundes in der Folie führen könnte.

Vorteilhaft kann vorgesehen sein, dass die Vlieslage einen Quellstoff aufweist. Dadurch kann die Fassadenfolie selbstabdichtende Eigenschaften erhalten: Falls ein Nagel durch die Fassadenfolie geschlagen wird oder die Oberfläche der Fassadenfolie anderweitig verletzt wird, kann Feuchtigkeit in die Fassadenfolie eindringen. Der in der Vlieslage befindliche Quellstoff quillt dann auf und verhindert weiteren Feuchtigkeitseintritt, so dass im Ergebnis die Fassadenfolie trotz der Beschädigung dicht bleibt.

Als Quellstoff kommt beispielsweise ein als Superabsorber bezeichnetes Material in Frage.

Der Quellstoff kann direkt an die Fasern des Vlieses angelagert sein, oder als Hüllschicht Teil der Fasern sein. Er kann aber auch als separates Material in das Vlies eingebracht sein. Granulatförmiger Quellstoff kann beispielsweise in das Vlies eingestreut werden, nachdem das Vlies mit einer ersten Folienlage verbunden worden ist und bevor die Vlieslage mit der zweiten Folienlage verbunden wird.

Weiterhin kann vorgesehen sein, dass das Vlies brandhemmend ausgestaltet ist so dass der vorschlagsgemäßen Fassadenfolie möglichst weite Einsatzbereiche ermöglicht werden. Bei der brandhemmenden Ausgestaltung des Vlieses kann insbesondere vorteilhaft vorgesehen sein, dass das Vlies selbstverlöschend ausgestaltet ist, so dass ein besonders effektiver Brandschutz gewährleistet werden kann. Das brandhemmende und ggf. selbstverlöschende Vlies kann beispielsweise vorteilhaft ein Melaminharz oder andere handelsübliche Materialien enthalten, welche der Fassadenfolie die gewünschten brandhemmenden oder selbstverlöschende Eigenschaften vermitteln, so dass durch Einsatz handelsüblicher und dementsprechend preisgünstiger Rohstoffe die gewünschten Produkteigenschaften der Fassadenfolie ermöglicht werden. Dabei kann insbesondere vorgesehen sein, die Vlieslage derart auszugestalten, dass die Fassadenfolie die gewünschten Produkteigenschaften erhält. Beispielsweise können in die Hohlräume des Vlieses die zusätzlichen Materialien eingebracht werden.

Vorteilhaft kann aus der vorschlagsgemäßen Fassadenfolie ein vorkonfektionierter Fassadendichtstreifen hergestellt werden. Derartige Fassadendichtstreifen werden beispielsweise im Übergangsbereich von der großflächigen Fassade zu Fassadeneinschnitten, wie Türen oder Fenstern verwendet, wo sie einen dichten Übergang von der übrigen Fassade zu der jeweiligen Laibung ermöglichen. Dementsprechend sind derartige Fassadendichtstreifen schmaler geschnitten als die übrige, üblicherweise als Rollenware konfektionierte Fassadenfolie. Beispielsweise können die Fassadendichtstreifen Breiten von etwa 20 cm aufweisen, während die übrige Fassadenfolie eine breite von etwa 1 m bis 1,5 m aufweist.

Vorteilhaft können die Fassadendichtstreifen im Sinne einer möglichst einfachen Verarbeitung nicht nur hinsichtlich ihrer Abmessungen, also ihrer Breite, vorkonfektioniert sein, sondern bereits auch mitzusätzlichen Dichtelementen versehen sein. So kann beispielsweise vorteilhaft vorgesehen sein, dass der Fassadendichtstreifen mit einem zusätzlichen Dichtungsprofil versehen ist, welches beispielsweise aus einem Elastomerwerkstoff bestehen kann oder aus einem Schaumwerkstoff. Beispielsweise kann ein solcher Dichtungsprofilstreifen als sogenannter Keder ausgestaltet sein, der aus einem SK- oder Butyl-Material besteht und mit der Fassadenfolie des Fassadendichtstreifens verklebt ist.

Je nach Ausgestaltung der Fassadenfolie kann also eine dampfdiffusionsoffene Folie geschaffen werden, die - abgesehen von ihrer Dehnbarkeit und Reißfestigkeit - im wesentlichen die Ansprüche an die Dampfdiffusionsoffenheit und an die Winddichtigkeit sowie Wasserdichtigkeit erfüllt, so dass für den Einsatz an Gebäudefassaden ein gegen Delamination gut gesichertes und zugfestes Endprodukt als Fassadenfolie geschaffen wird.

Es kann vorteilhaft vorgesehen sein, die Vlieslage an ihren beiden Oberflächen zu flammen, um die Verbindung zur angrenzenden Folienlage zu verbessern.

## Patentansprüche

1. Mehrlagige Fassadenfolie,
mit einer aus einem Vlies gebildeten Vlieslage,
und einer aus einer Kunststofffolie gebildeten Folienlage, wobei die Vlieslage und die Folienlage miteinander verbunden sind,
**dadurch gekennzeichnet**,
▪ dass das Vlies als Mittellage zwischen zwei Folienlagen angeordnet ist,
aus einem thermoplastischen Elastomer besteht, unidirektional elastisch dehnbar ist,
und als Meltblown ausgestaltet ist,
▪ jede Folienlage ebenfalls unidirektional elastisch dehnbar ist,
ein elastisch verformbares, als TPU bezeichnetes thermoplastisches Urethan enthält,
als Extrusionsbeschichtung mit dem Vlies verbunden ist,
▪ und die Fassadenfolie eine Dehnfestigkeit von wenigstens 40% in Längs- und Querrichtung aufweist sowie eine Reißfestigkeit, bezogen auf einen 50 mm breiten Folienstreifen, von wenigstens 120 N, hinsichtlich ihrer Dampfdurchlässigkeit einen s_{d}-Wert von höchstens 1,5 m,
und hinsichtlich ihrer Wasserundurchlässigkeit einen Wert, der einer Wassersäule von wenigstens 8 m entspricht.

2. Fassadenfolie nach Anspruch 1,
**dadurch gekennzeichnet,**
**dass** die Folienlagen jeweils aus einer monolithischen Kunststofffolie gebildet sind.

3. Fassadenfolie nach Anspruch 1 oder 2,
**dadurch gekennzeichnet,**
**dass** das Vlies aus einem TPU gebildet ist.

4. Fassadenfolie nach einem der vorhergehenden Ansprüche,
**dadurch gekennzeichnet,**
**dass** die Folienlagen jeweils aus TPU gebildet sind.

5. Fassadenfolie nach einem der vorhergehenden Ansprüche,
**dadurch gekennzeichnet,**
**dass** die Vlieslage einen Quellstoff aufweist.

6. Fassadenfolie nach Anspruch 5,
**dadurch gekennzeichnet,**
**dass** die Vlieslage ein als Superabsorber bezeichnetes Material in gleichmäßiger Verteilung enthält.

7. Fassadenfolie nach einem der vorhergehenden Ansprüche,
**dadurch gekennzeichnet,**
**dass** das Vlies ein Flächengewicht von höchstens 150 g/m² aufweist.

8. Fassadenfolie nach einem der vorhergehenden Ansprüche,
**dadurch gekennzeichnet,**
**dass** das Vlies hydrophob ist.

9. Fassadenfolie nach einem der vorhergehenden Ansprüche,
**dadurch gekennzeichnet,**
**dass** das Vlies brandhemmend ist.

10. Fassadenfolie nach einem der vorhergehenden Ansprüche,
**dadurch gekennzeichnet,**
**dass** das Vlies selbstverlöschend ist.

11. Fassadendichtstreifen, der als Streifen aus einer Fassadenfolie nach einem der vorhergehenden Ansprüche ausgestaltet ist.

## Claims

1. Multiple-layer facade foil having a layer of non-woven material consisting of fleece, and a foil layer consisting of plastic film, where the fleece layer and foil layer are joined to one another, **characterised in**,
▪ that the fleece is arranged between two layers of foil, consists of a thermoplastic polymer, is elastically ductile in one direction and consists of meltblown material,
▪ each layer of foil is also unidirectionally ductile, contains an elastic thermoplastic urethane designated as TPU, is joined to the fleece as an extrusion layer,
▪ and the facade foil has a tensile strength of at least 40% in the longitudinal and transverse direction and a tear strength of at least 120 N with reference to a 50 mm wide strip of foil, a maximum S_{d} value of 1,5 m with regard to vapour permeability, and a value equivalent to a water column of at least 8 m with regard to water impermeability.

2. Facade foil in accordance with claim 1, **characterised in that** each of the foil layers consists of a monolithic plastic film.

3. Facade foil in accordance with claim 1 or claim 2, **characterised in that** the fleece consists of a TPU.

4. Facade foil in accordance with any of the aforementioned claims, **characterised in that** each of the layers of film consists of TPU.

5. Facade foil in accordance with any of the aforementioned claims, **characterised in that** the fleece layer has a bulking material.

6. Facade foil in accordance with claim 5, **characterised in that** the fleece layer contains an evenly distributed material designated as superabsorber.

7. Facade foil in accordance with any of the aforementioned claims, **characterised in that** the fleece has a maximum basis weight of 150 g/m².

8. Facade foil in accordance with any of the aforementioned claims, **characterised in that** the fleece is hydrophobic.

9. Facade foil in accordance with any of the aforementioned claims, **characterised in that** the fleece is flame retardant.

10. Facade foil in accordance with any of the aforementioned claims, **characterised in that** the fleece is self-extinguishing.

11. Facade sealing strip which is formed as a strip of a facade foil in accordance with any of the aforementioned claims.

## Revendications

1. Film multicouche pour façades, composé d'une couche de non-tissé et d'une couche de film en matière plastique, sachant que la couche de non-tissé et la couche de film sont reliées entre elles, **caractérisé en ce que**
▪ le non-tissé est agencé comme couche médiane entre deux couches de films, qu'il se compose d'un élastomère thermoplastique, qu'il présente une extensibilité élastique unidirectionnelle, et qu'il est configuré en couche pulvérisée fondue,
▪ chaque couche du film est également extensible élastiquement dans une direction, qu'elle contient un uréthane thermoplastique et déformable élastiquement appelé TPU, qu'elle est reliée, en tant que revêtement extrudé, au non-tissé,
▪ et que le film de façade présente une résistance à l'allongement d'au moins 40 % dans le sens longitudinal et transversal, ainsi qu'une résistance à la déchirure, référée à une bande de film large de 50 mm, d'au moins 120 N, une valeur S_{d} d'au plus 1,5 m quant à sa perméabilité à la vapeur, et une imperméabilité à l'eau dont la valeur correspond à une colonne d'eau d'au moins 8 m.

2. Film pour façades selon la revendication 1, **caractérisé en ce que** les couches de film sont respectivement formées d'un film plastique monolithique.

3. Film pour façades selon la revendication 1 ou 2, **caractérisé en ce que** le non-tissé est formé à partir d'un TPU.

4. Film pour façades selon l'une des revendications précédentes, **caractérisé en ce que** les couches de film sont formées chacune de TPU.

5. Film pour façades selon l'une des revendications précédentes, **caractérisé en ce que** la couche de non-tissé présente un agent gonflant.

6. Film pour façades selon la revendication 5, **caractérisé en ce que** la couche de non-tissé contient, réparti de manière uniforme, un matériau appelé « superabsorber ».

7. Film pour façades selon l'une des revendications précédentes, **caractérisé en ce que** le non-tissé présente un grammage de 150 g/m² maximum

8. Film pour façades selon l'une des revendications précédentes, **caractérisé en ce que** le non-tissé est hydrophobe.

9. Film pour façades selon l'une des revendications précédentes, **caractérisé en ce que** le non-tissé est inhibiteur d'incendie.

10. Film pour façades selon l'une des revendications précédentes, **caractérisé en ce que** le non-tissé est auto-extinguible.

11. Bande d'étanchéité pour façades, configurée sous forme de bande provenant d'un film pour façades selon l'une des revendications précédentes.
